# EUROPÄISCHE PATENTSCHRIFT

(11) **EP 1 631 371 B1**
(45) Veröffentlichungstag und Bekanntmachung des Hinweises auf die Patenterteilung: **20.09.2006**
(21) Anmeldenummer: 04732309.2
(22) Anmeldetag: 12.05.2004
(51) Int. Cl.: B01F 15/00

(54) **VORRICHTUNG ZUR BEHANDLUNG VON FESTSTOFFEN**
DEVICE FOR THE TREATMENT OF SOLID SUBSTANCES
DISPOSITIF POUR LE TRAITEMENT DE SOLIDES

(30) Priorität: 13.05.2003 DE 20307458 U
(43) Veröffentlichungstag der Anmeldung: 08.03.2006
(73) Patentinhaber: EKATO Solidmix GmbH, 79650 Schopfheim (DE)
(72) Erfinder: SCHMIDT, Uwe, 79650 Schopfheim (DE); KRUMBHOLZ, Christian, 79689 Maulburg (DE); AMSLER, Martin, 79725 Laufenburg (DE)
(74) Vertreter: Hering, Hartmut
(86) Internationale Anmeldenummer: PCT/EP2004/005099
(87) Internationale Veröffentlichungsnummer: WO 2004/101127

(56) Entgegenhaltungen:
- US-A- 4 844 355
- US-A- 4 941 750
- US-A- 5 090 815

## Beschreibung

Die Erfindung betrifft eine Vorrichtung zur Behandlung von Feststoffen, insbesondere zum Mischen, Granulieren oder Trocknen von Feststoffen, mit einem Behälter und einer in diesem angeordneten Antriebswelle, sowie wenigstens einem mit der Welle drehfest verbundenen Mischorgan, das zum Beispiel aus zwei Mischarmen gebildet ist.

Aus US-A-5,090,815 ist eine Vorrichtung zur Behandlung von Feststoffen, mit einem Behälter, einer in diesem angeordneten Antriebswelle und wenigstens einem mit der Welle drehfest verbundenen Mischorgan bekannt, wobei jeder Mischarm ein Hauptblatt aufweist, das einen im wesentlichen dreieckförmigen Querschnitt aufweist, dessen Dreieckspitze zur Drehrichtung des Mischorganes hin gerichtet ist.

Der Erfindung liegt demgegenüber die Aufgabe zugrunde, allgemein die Qualität beim Mischen, Granulieren oder Trocknen der Feststoffe zu verbessern.
Nach der Erfindung wird hierzu eine Vorrichtung zur Behandlung von Feststoffen bereitgestellt, welche die Merkmale des Anspruches 1 aufweist.

An das Hauptblatt schließt sich vorteilhafterweise in Richtung zum Behälterboden ein Bodenblatt an, das im wesentlichen einen rechteckigen Querschnitt aufweist.

Das Bodenblatt ist über einen im wesentlichen zylindrischen Holm drehfest mit der Antriebswelle verbunden.

Vorzugsweise sind das Hauptblatt, das Bodenblatt und das Endblatt zur Drehebene in einem Winkel α₁ bzw. α₂ bzw. δ im Bereich von 15° bis 60° angestellt.

Zur Behälterwand hin sind das Hauptblatt, das Bodenblatt und das Endblatt in einem Freiwinkel β im Bereich von 1° bis 30° angestellt.

Schließlich ist das Endblatt zur Radialen in einem Neigungswinkel γ im Bereich von 1° bis 30° angestellt.

Vorzugsweise haben die Bodenblätter der beiden Mischarme zusammen eine im wesentlichen Z-förmige Gestalt.

Der Abstand des Hauptblattes, des Bodenblattes und des Endblattes von der Behälterinnenwand liegt vorteilhafterweise etwa im Bereich von 1 bis 10 mm.

Nach einer weiteren Ausbildung der Erfindung kann im Behälter ein Stromstörer angeordnet sein, der im allgemeinen einen Kreisquerschnitt hat, und in Strömungsrichtung angeschrägt ist.

Ferner kann die Vorrichtung zweckmäßigerweise mit einem Dispergierorgan (Zerhacker) ausgerüstet sein, durch das hohe Scherkräfte in das Produkt einbringbar sind.

Das Dispergierorgan hat eine Welle, auf der mindestens ein Messer angebracht ist.

Nach noch einer weiteren Ausgestaltung der Erfindung ist in den Boden des Mischbehälters eine Begasungseinrichtung eingebaut, durch welche ein Gas, zum Beispiel Luft, in Strömungsrichtung des zu behandelnden Produktes einbringbar ist.

Der Mischbehälter kann zweckmäßigerweise einen flachen Boden aufweisen, der über einen gekrümmten Abschnitt in die Behälterwand übergeht, wobei der Radius des gekrümmten Übergangs-Abschnittes etwa (0,05 bis 0,2) x Innendurchmesser des Mischbehälters betragen kann.

Eine beispielsweise Ausführungsform der erfindungsgemäßen Vorrichtung wird nachfolgend an Hand der Zeichnung beschrieben, in der
- Fig. 1A, 1B, 1C und 1D: eine Seitenansicht, eine Draufsicht, eine weitere Seitenansicht und eine perspektivische Ansicht des Mischorganes der erfindungsgemäßen Vorrichtung zeigen.
- Fig. 1E: zeigt einen Schnitt längs der Linie A-A von Fig. 1A.
- Fig. 2: zeigt eine Ansicht eines mit Messern versehenen Dispergierorgans der erfindungsgemäßen Vorrichtung.
- Fig. 3: zeigt eine Draüfsicht auf das Dispergierorgan nach Figur 2.

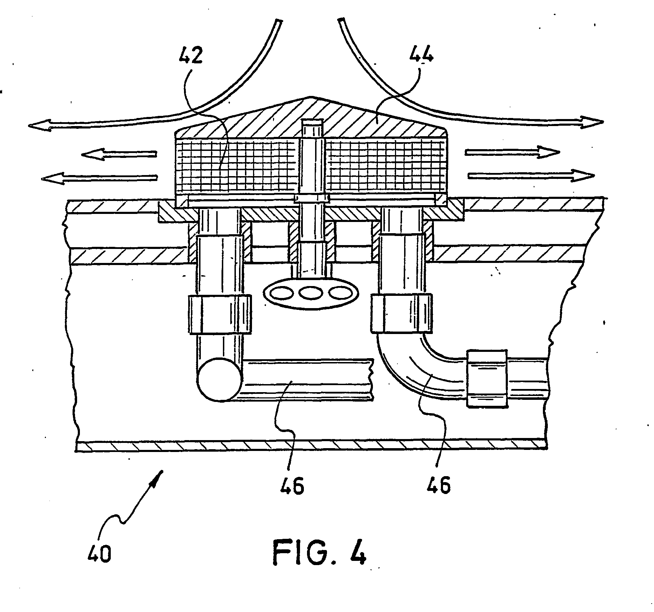

- Fig. 4: zeigt im Schnitt eine Begasungsvorrichtung zum Einbringen von Gas in den Mischbehälter der erfindungsgemäßen Vorrichtung.

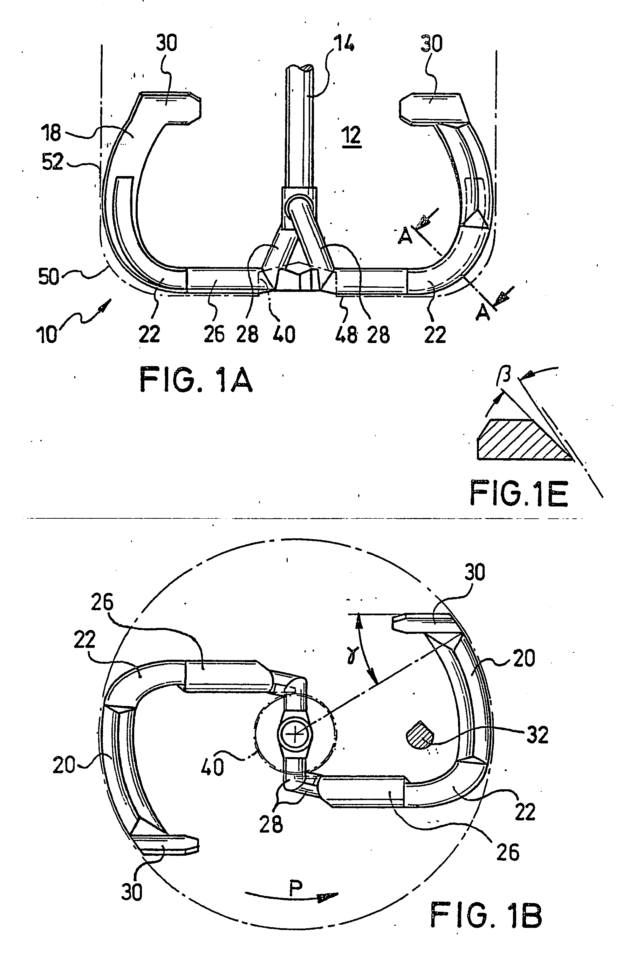

Wie Figur 1A zeigt, umfaßt die erfindungsgemäße Vorrichtung 10 einen Mischbehälter 12, der einen ebenen Boden 48 hat, der über einen Übergangsbereich 50 in den zylindrischen Teil des Behälters 12 übergeht.

Der Radius des Übergangsbereichs 50 beträgt etwa (0,05 - 0,2) x Durchmesser des Behälters 12. Die Höhe des zylindrischen Teils 52 des Behälters 12 ist maximal gleich seinem Durchmesser.

Die Vorrichtung hat in der Regel einen flachen Deckel (nicht gezeigt), der aber auch als Klopperdeckel ausgeführt sein kann. Der Behälter 12 kann mit einem Doppelmantel und/oder einem aufgesetzten Filter ausgestattet sein.

Im Behälter 12 ist zentrisch eine von oben angetriebene Welle 14 frei fliegend ohne Bodenlager angeordnet.

Drehfest mit der Welle 14 verbunden ist ein Mischorgan, das in der dargestellten Ausführungsform beispielsweise aus zwei sich diametral gegenüberliegenden Mischarmen 16 gebildet ist.

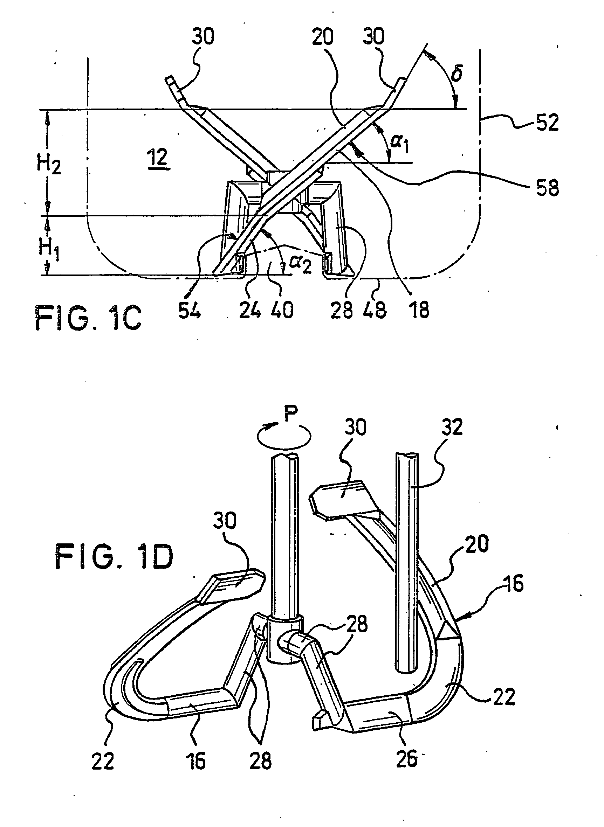

Jeder Mischarm 16 umfaßt ein Hauptblatt 18 zum Beispiel mit rechteckigem Querschnitt, das sich von knapp über dem Boden 48 nach oben erstreckt, wie insbesondere die Figuren 1A und 1C zeigen. Das Häuptblatt 18 ist, wie Figur 1C zeigt, abgeknickt ausgebildet, wodurch ein unterer Bereich 54 und ein oberer Bereich 58 gebildet werden.

Die Höhe H₁ des unteren Bereiches 54 beträgt etwa (0,1 bis 0,3) x Durchmesser des Behälters 12, und die Höhe H₂ des oberen Bereiches 58 beträgt etwa (0,2 - 0,5) x Durchmesser des. Behälters 12, jeweils gemessen parallel zur Mittelachse der Welle 14. Der obere Bereich 58 des Hauptblattes 18 ist in einem Winkel α₁ von etwa 15° bis 60° zur Drehebene angestellt, der untere Bereich 54 ist in einem Winkel α₂ von etwa 15° bis 60° zur Drehebene angestellt, wobei die beiden Winkel gleich oder unterschiedlich sein können, und α₂ größer oder kleiner als α₁ sein kann.

Auf den oberen Bereich 58 des Hauptblattes 18 ist eine dreieckförmige Schiene 20 aufgesetzt, und entweder einteilig mit dem Hauptblatt 18 ausgebildet, oder in geeigneter Weise fest mit diesem verbunden. Die dreieckförmige Schiene 20 erstreckt sich über die gesamte Länge des oberen Bereiches 58 des Hauptblattes 18. Die Grundfläche der Schiene 20 ist zum Hauptblatt 18 hin gerichtet, während die Spitze (Kante) des Dreieckquerschnittes zur Drehbewegung des Rührorganes hin gerichtet ist. Der untere Bereich 54 des Hauptblattes 18 ist durch eine Leiste oder Schiene 24 verstärkt, die sich auch noch über einen Teil des oberen Bereiches 58 des Hauptblattes 18 erstreckt.

Am oberen Ende des Hauptblattes 18 ist ein Endblatt 30 angeordnet, das zweckmäßigerweise einteilig mit dem Hauptblatt 18 ausgebildet ist. Das Endblatt 30 ist, wie insbesondere die Figur 1B zeigt, von der Behälterinnenwand aus etwa einwärts gerichtet, und es ist, wie ebenfalls Figur 1B zeigt, zu einer radialen auf die Behälterwand in einem Winkel γ geneigt, der im Bereich von etwa 1° bis 30° liegt. Zur Drehebene ist das Endblatt 30, wie Figur 1C zeigt, in einem Winkel δ angestellt, der in einem Bereich von etwa 15° bis 60° liegt. Das Endblatt 30 ist in Form eines ebenen Bleches ausgebildet.

In Richtung zum Boden 48 des Behälters 12 hin schließt sich, wie die Figuren 1A, 1B und 1D zeigen, ein abgebogenes Bodenblatt 22 an, das aus dem Hauptblatt 18 und der Verstärkungsschiene 24 gebildet ist. Dieses Bodenblatt 22 geht über in ein im wesentlichen parallel zum Boden 48 verlaufendes Übergangsstück 26, das seinerseits in einen zylindrischen Holm 28 übergeht, der die Verbindung des Mischarmes 16 mit der Antriebswelle 14 herstellt und das durch die letztere eingebrachte Drehmoment überträgt. Das Übergangsstück 26 bewirkt somit den Übergang vom flachen rechteckigen Bodenblatt 22 in den zylindrischen Holm 28.

Wie insbesonder Figur 1B zeigt, erstreckt sich der obere Bereich 58 des Hauptblattes 18, und damit auch die dreieckförmige Schiene 20, und die vorlaufende Kante des Endblattes 30 längs der Behälterinnenwand, während, wie Figur 1A zeigt, das Bodenblatt 22 im wesentlichen der Krümmung des Übergangsbereiches 50 des Mischbehälters 12 angepaßt ist, und das Übergangsstück 26 im wesentlichen parallel zum Boden 48 des Behälters 12 verläuft. Die Blätter 18, 22 und 30 sind zur Behälterwand mit einem Freiwinkel β im Bereich von etwa 1° bis 30° angestellt, wie Figur 1E zeigt, die einen Schnitt durch das Bodenblatt 22 in Figur 1A darstellt.

Der Abstand der Blätter 18, 22 und 30 sowie des Übergangsstücks 26 zur Wand bzw. zum Boden des Behälters 12 ist eng und liegt im Bereich von etwa 1 bis 10 mm.

In der dargestellten Ausführungsform besteht der zylindrische Holm 28 aus zwei Abschnitten, d.h. einem, der sich vom Übergangsstück 26 aus im wesentlichen nach oben, und einem Abschnitt, der sich im wesentlichen quer zur Achse der Antriebswelle 14 erstreckt. Dieser Holm 28 kann auch in anderer Weise ausgebildet sein, seine Aufgabe liegt nur darin, das Drehmoment von der Welle 14 auf die Mischarme 16 zu übertragen.

Wie Figur 1B zeigt, haben die Bodenblätter 22, die Übergangsstücke 26 und die Holme 28 der beiden Mischarme 16 zusammen eine etwa Z-förmige Gestalt, wodurch auch bei niedriger Drehzahl das zu behandelnde Produkt radial nach außen gefördert wird, und so eine praktisch restlose Entleerung über ein am Außenradius angeordnetes Auslassventil (nicht gezeigt) ermöglicht wird, wobei die Drehrichtung durch den Pfeil P angezeigt ist.

Die dargestellte Vorrichtung 10 kann zweckmäßigerweise mit wenigstens einem Stromstörer 32 ausgerüstet sein, der im wesentlichen aus einem zylindrischen Grundkörper besteht, welcher in Strömungsrichtung angeschrägt oder angefräst ist. Der Stromstörer 32 ist von oben her parallel zur Welle 14 exzentrisch in den Behälter 12 eingebaut. Er verringert zum einen die Rotationsbewegung im Produkt, zum anderen führt er größere Klumpen, die sich während einer Trocknung bilden können, dem Mischorgan zu, durch das sie zerteilt werden.

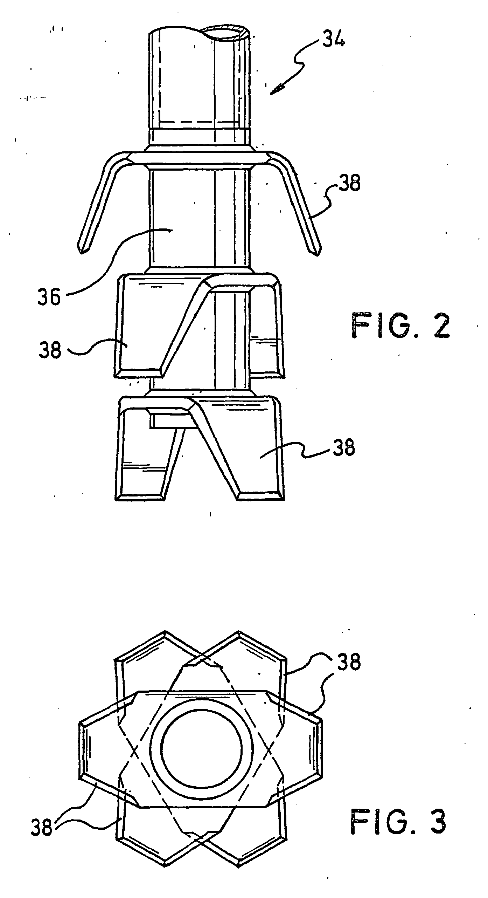

Ferner kann vorteilhafterweise ein Dispergierorgan in Form eines Zerhackers 34 vorgesehen werden, das auf dem Deckel des Behälters 12 angebracht ist (nicht gezeigt). Der Zerhacker 34 hat, wie Figur 2 zeigt, eine Welle 36, die von oben her exzentrisch zwischen der Welle 14 und dem Hauptblatt 18 im wesentlichen parallel zur Welle 14 in den Behälter 12 eingebaut ist und knapp oberhalb des Holmes 28 endigt. Am unteren Ende der Welle 36 sind, wie Figur 2 zeigt, mindestens eines, vorzugsweise mehrere und beispielsweise drei Messer 38 übereinander angeordnet, die, wie Figur 3 zeigt, in Umfangsrichtung in einem Winkel von 60° zueinander versetzt sind.

Der Zerhacker 34 läuft mit hoher Umfangsgeschwindigkeit vorzugsweise über 15 m/s um, und bringt dadurch lokal sehr hohe Scherkräfte in das Produkt ein. Hierdurch werden Klumpen und Knollen im Produkt zerteilt. Die Messer können jedoch, abhängig vom zu behandelnden Produkt, auch in andrer als in der dargestellten Weise ausgebildet sein, um je nach Produkteigenschaften mehr oder weniger Scherung im Produkt zu erzeugen.

In den Boden 48 des Behälters 12 ist, wie Figuren 1A und 1C zeigen, zentral eine Begasungseinrichtung 40 eingebaut. Sie besteht aus einem zylindrischen Grundkörper 42 mit einem konischen Oberteil 44. Der Grundkörper besteht aus einem Metallfiltergewebe. Über wenigstens eine Zufuhrleitung 46 wird ein Gas, zum Beispiel Luft, in den Grundkörper 42 eingeführt, das aus dem letzteren direkt in die Strömungsrichtung des Produktes eingebracht wird. Auf diese Weise wird das Gas über den gesamten Behälterquerschnitt verteilt, und steigt dann durch die gesamte Behälterhöhe auf. Diese gleichmäßige Gasverteilung führt zu einer hohen Phasengrenzfläche zwischen Gas und Feststoff.

Die Erfindungsgemäße Vorrichtung wird im wesentlichen zum Mischen, Granulieren und Trocknen von Feststoffen eingesetzt. Sie kann aber auch zum Auf heizen oder Abkühlen von Feststoffen genutzt werden. In Einzelfällen können auch mehrere Prozessschritte in der Vorrichtung nacheinander durchgeführt werden, zum Beispiel chemische Reaktionen, Abdampfen von Lösungsmitteln, Verdampfungs- oder Kühlungskristallisation.

Der Mischbehälter kann mit einem Doppelmantel und/oder einem aufgesetzten Filter ausgestattet sein.

Die Geometrie des Mischorganes wird durch einen schrägen Schnitt durch einen Zylinder erzeugt, wodurch das Blatt eine elliptische Außen- und Innenkontur erhält, und daher nicht verbunden werden muß. Das dreieckförmige Profil des Hauptblattes bewirkt, dass sich an den in Strömungsrichtung gerichteten Flächen keine Produktanhaftungen bilden. Ferner wird ein Teil des axial nach oben geförderten Produktes zur Wand hin durch den Spalt zwischen den Mischarmen und der Behälterwand gedrückt, und so zu einem stabilen Granulat verdichtet.

Die Endblätter 30 sorgen dafür, dass das Produkt, d.h. der Feststoff, zur Mitte transportiert wird. Auch die Geometrie des Endblattes wird durch einen schrägen Schnitt durch den zylindrischen Behälterteil erzeugt. Die vorlaufende Blechkante des Blattes 30 hat einen konstanten Abstand zur zylindrischen Wand des Behälters 12, und sie hat eine elliptische Form.

Das Bodenblatt 22 und das Übergangsstück 26 dienen zum einen zum Verdichten des Granulates zwischen Boden und Mischarmen, zum anderen auch zum Austrag des fertigen Produktes.

Der enge Wandabschnitt zwischen den Blättern und der Innenwand des Mischbehälters verhindert im wesentlichen Wandbeläge und Krustenbildung und gewährleistet damit gute Wärmeübergangskoeffizienten.

Das Produkt wird an der Behälterwand axial nach oben gefördert und an der Produktoberfläche zur Mitte geworfen. Von der Mitte der Oberfläche wird es durch Massenfluß nach unten gezogen, wodurch eine großräumige totraumfrele Mischbewegung entsteht, die kurze Mischzeiten und hohe Wärmeübergänge gewährleistet.

Mit der gewählten Drehzahl kann die Scherintensität des Mischorgans beeinflusst werden. Bei hoher Drehzahl eignet sich das Mischorgan durch seine vielen eng zur Behälterwand liegenden Scherspalte sehr gut zum Granulieren. Bei diesem Prozeß werden die verschiedenen pulvrigen Komponenten zusammen mit einer Binderlösung in den Spalten verdichtet und kompaktiert. Hierdurch erhält das Granulat eine stabile Struktur. Bei einer mittleren Drehzahl liegt die Umfangsgeschwindigkeit noch so hoch, dass leicht zerfallende Klumpen oder Knollen durch die Schubspannungen, die durch das Hauptblatt erzeugt werden, aufgeschlossen werden. Mittelschwer zerfallende Klumpen können durch den Einbau von Stromstörern zerteilt werden. Schwer zerfallende Klumpen können durch den von oben exzentrisch eingebauten Zerhacker zerstört werden. Bei einer niedrigen Drehzahl kann man nahezu ohne Scherwirkung den Behälterinhalt umwälzen, und dadurch extrem scherempfindlidhe Granulate in kurzer Zeit trocknen.

Die Vorrichtung kommt ohne Bodenlager aus und benötigt somit keine Dichtung im Produkt. Sie ist gut zugänglich und erlaubt durch die erfindungsgemäße Form des Mischorganes im Bodenbereich und durch enge Wandabstände eine im wesentlichen vollständige Entleerung des Mischbehälters, ohne dass ein Schwenken des Behälters erforderlich ist.

Die erfindungsgemäße Vorrichtung ermöglicht eine sehr gleichmäßige Benetzung der Produktoberfläche, eine gleichmäßige Verteilung der Binderlösung und eine im wesentlichen vollständige Granulation.

Die kegelige Ausführung des Oberteiles 44 der Begasungseinrichtung 40 verhindert Produktanhaftungen im Bereich niedriger Umfangsgeschwindigkeiten. Der große Ausströmquerschnitt aus dem zylindrischen Grundkörper 42 der Begasungseinrichtung 40 sorgt für niedrige Gasgeschwindigkeiten und gleichmäßige Verteilung des Gases. Das Gas strömt hierbei in derselben Richtung, in der der Feststoff durch das Mischorgan gefördert wird, wodurch eine optimale Verteilung im gesamten Behälterquerschnitt erzielt wird.

Schließlich wird durch die geringere Umfangsgeschwindigkeit bei mindestens gleichem Ergebnis ein geringerer Leistungseintrag ermöglicht.

## Patentansprüche

1. Vorrichtung zur Behandlung von Feststoffen, insbesondere zum Mischen, Granulieren oder Trocknen, mit einem Behälter (12), einer in diesem angeordneten Antriebswelle (14) und wenigstens einem mit der Welle (14) drehfest verbundenen aus Mischarmen gebildeten Mischorgan, das zum Beispiel aus zwei Mischarmen (16) gebildet ist, bei welcher jeder Mischarm (16) ein Hauptblatt (18) aufweist, das einen im wesentlichen dreieckförmigen Querschnitt aufweist, dessen Dreieckspitze zur Drehrichtung des Mischorganes hin gerichtet ist, **dadurch gekennzeichnet, dass** sich an das obere Ende des Hauptblattes (18) ein Endblatt (30) mit im wesentlichen Rechteckquerschnitt anschließt.

2. Vorrichtung nach Anspruch 1, **dadurch gekennzeichnet, dass** sich an das Hauptblatt (18) in Richtung zum Behälterboden (48) ein Bodenblatt (22) mit im wesentlichen Rechteckquerschnitt anschließt.

3. Vorrichtung nach Anspruch 1, **dadurch gekennzeichnet, dass** das Bodenblatt (22) über einen im wesentlichen zylindrischen Holm (28) drehfest mit der Welle (14) verbunden ist.

4. Vorrichtung nach Anspruch 1, **dadurch gekennzeichnet, dass** das Hauptblatt (18) zur Drehebene in einem Winkel (α₁) im Bereich von 15° bis 60° angestellt ist.

5. Vorrichtung nach Anspruch 2, **dadurch gekennzeichnet, dass** das Bodenblatt (22) zur Drehebene in einem Winkel (α₂) im Bereich von 15° bis 60° angestellt ist.

6. Vorrichtung nach Anspruch 1, **dadurch gekennzeichnet, dass** das Endblatt (30) zur Drehebene einen Winkel (δ) im Bereich von 15° bis 60° angestellt ist.

7. Vorrichtung nach einem der vorhergehenden Ansprüche, **dadurch gekennzeichnet, dass** das Endblatt (30), das Hauptblatt (18) und das Bodenblatt (22) zur Innenwand des Behälters (12) in einem Freiwinkel (β) im Bereich von 1° bis 30° angestellt sind.

8. Vorrichtung nach Anspruch 1, **dadurch gekennzeichnet, dass** das Endblatt (30) zur Radialen in einem Neigungswinkel (γ) im Bereich von 1° bis 30° angestellt ist.

9. Vorrichtung nach Anspruch 2 und 3, **dadurch gekennzeichnet, dass** die Bodenblätter (22) und die zylindrischen Holme (28) der beiden Mischarme (16) eine im wesentlichen Z-förmige Gestalt haben. (Fig. 2)

10. Vorrichtung nach einem der vorhergehenden Ansprüche, **dadurch gekennzeichnet, dass** der Abstand der Blätter (18, 22, 30) zur Innenwand des Behälters (12) etwa 1 bis 10 mm beträgt.

11. Vorrichtung nach einem der vorhergehenden Ansprüche, **dadurch gekennzeichnet, dass** im Behälter (12) wenigstens ein Stromstörer (32) eingebaut ist.

12. Vorrichtung nach Anspruch 112, **dadurch gekennzeichnet, dass** der Stromstörer (32) im wesentlichen Kreisquerschnitt- hat, und in Strömungsrichtung angeschrägt ist.

13. Vorrichtung nach einem der vorhergehenden Ansprüche, **dadurch gekennzeichnet, dass** sie mit einem Zerhacker (34) ausgerüstet ist, durch den hohe Scherkräfte in das Produkt einbringbar sind.

14. Vorrichtung nach Anspruch 13, **dadurch gekennzeichnet, dass** der Zerhacker (34) eine Welle (36) aufweist, auf der eine Mehrzahl von Messern (38) angebracht ist.

15. Vorrichtung nach einem der vorhergehenden Ansprüche, **dadurch gekennzeichnet, dass** in den Boden (48) des Behälters (12) eine Begasungseinrichtung (40) eingebaut ist.

16. Vorrichtung nach Anspruch 15, **dadurch gekennzeichnet, dass** aus der Begasungseinrichtung (40) ein Gas, zum Beispiel Luft, in Strömungsrichtung des zu behandelnden Produktes in den Behälters (12) einbringbar ist.

17. Vorrichtung nach Anspruch 1, **dadurch gekennzeichnet, dass** der Behälter (12) einen ebenen Boden (48) aufweist, der über einen gekrümmten Übergangsbereich (50) in die zylindrische Wand des Behälters (12) übergeht.

18. Vorrichtung nach Anspruch 17 **dadurch gekennzeichnet, dass** der Radius des Übergangsbereiches (50) etwa (0,05 - 0,2) x D beträgt. (D = Innendurchmesser des Behälters (12))

19. Vorrichtung nach Anspruch 2, **dadurch gekennzeichnet, dass** die Höhe (H₁) des Bodenblattes (22) etwa (0,1 bis 0,3) x D beträgt. (D = Innendurchmesser des Behälters (12))

20. Vorrichtung nach Anspruch 1, **dadurch gekennzeichnet, dass** die Höhe (H₂) des Hauptblattes (18, 20) etwa (0,2 - 0,5) x D beträgt. (D = Innendurchmesser des Behälters (12)).

## Claims

1. Apparatus for treating solid materials, in particular for mixing, granulating or drying, with a vessel (12), a drive shaft (14) located in the latter and, attached to the shaft (14) in torque-proof form, at least one mixing element comprising mixing arms, formed for example by two mixing arms (16), where each mixing arm (16) has a main blade (18) of essentially triangular cross-section, the apex of the triangle pointing in the mixing element's direction of rotation, **characterised in that** to the upper end of the main blade (18) an end blade (30) with essentially rectangular cross-section is attached.

2. Apparatus according to Claim 1, **characterised in that** a bottom blade (22) with essentially rectangular cross-section is attached to the main blade (18) in the direction of the vessel bottom (48).

3. Apparatus according to Claim 1, **characterised in that** the bottom blade (22) is attached to the shaft (14) in torque-proof form by an essentially cylindrical spar (28).

4. Apparatus according to Claim 1, **characterised in that** the main blade (18) is set at an angle (α₁) in the range 15° to 60° to the plane of rotation.

5. Apparatus according to Claim 2, **characterised in that** the bottom blade (22) is set at an angle (α₂) in the range 15° to 60° to the plane of rotation.

6. Apparatus according to Claim 1, **characterised in that** the end blade (30) is set at an angle (δ) in the range 15° to 60° to the plane of rotation.

7. Apparatus according to one of the foregoing Claims, **characterised in that** the end blade (30), main blade (18) and bottom blade (22) are set at a clearance angle (β) in the range 1° to 30° to the inside wall of the vessel (12).

8. Apparatus according to Claim 1, **characterised in that** the end blade (30) is set at an angle of inclination (γ) in the range 1° to 30° to the radial.

9. Apparatus according to Claims 2 and 3, **characterised in that** the bottom blades (22) and cylindrical spars (28) of both mixing arms (16) are essentially Z-shaped (Fig. 2).

10. Apparatus according to one of the foregoing Claims, **characterised in that** the clearance between the blades (18, 22, 30) and the inside wall of the vessel (12) measures approximately 1 to 10 mm.

11. Apparatus according to one of the foregoing Claims, **characterised in that** at least one baffle (32) is fitted in the vessel (12).

12. Apparatus according to Claim 112¹, **characterised in that** the baffle (32) has an essentially circular cross-section and is bevelled in the direction of flow.

13. Apparatus according to one of the foregoing Claims, **characterised in that** it is provided with a chopper (34) by means of which high shear forces can be introduced into the product.

14. Apparatus according to Claim 13, **characterised in that** the chopper (34) has a shaft (36) on which a plurality of cutting blades (38) is mounted.

15. Apparatus according to one of the foregoing Claims, **characterised in that** a gas injection device (40) is built into the bottom (48) of the vessel (12).

16. Apparatus according to Claim 15, **characterised in that** from the gas injection device (40) a gas, for example air, can be introduced into the vessel (12) in the direction of flow of the product to be treated.

17. Apparatus according to Claim 1, **characterised in that** the vessel (12) has a flat bottom (48) which merges via a curved transitional section (50) into the cylindrical wall of the vessel (12).

18. Apparatus according to Claim 17, **characterised in that** the radius of the transitional section (50) is approximately (0.05 - 0.2) x D (D = internal diameter of the vessel (12)).

19. Apparatus according to Claim 2, **characterised in that** the height (H₁) of the bottom blade (22) is approximately (0.1 to 0.3) x D (D = internal diameter of the vessel (12)).

20. Apparatus according to Claim 1, **characterised in that** the height (H₂) of the main blade (18, 20) is approximately (0.2 - 0.5) x D (D = internal diameter of the vessel (12)).

## Revendications

1. Dispositif servant à traiter des matières solides, en particulier à mélanger, granuler ou sécher, comprenant un récipient (12), un arbre d'entraînement (14) disposé dans celui-ci et au moins un organe mélangeur formé de bras mélangeurs, qui est relié à l'arbre (14) de manière résistante à la torsion, organe mélangeur, qui est formé par exemple de deux bras mélangeurs (16), chaque bras mélangeur (16) présentant une pale principale (18) de section transversale essentiellement triangulaire, la pointe du triangle étant tournée dans le sens de rotation de l'organe mélangeur, **caractérisé en ce qu'**une pale terminale (30) de section transversale essentiellement rectangulaire est jointe à l'extrémité supérieure de la pale principale (18).

2. Dispositif suivant la revendication 1, **caractérisé en ce qu'**une pale de fond (22) de section transversale essentiellement rectangulaire est jointe à la pale principale (18) dans la direction du fond du récipient (48).

3. Dispositif suivant la revendication 1, **caractérisé en ce que** la pale de fond (22) est reliée à l'arbre (14) de manière résistante à la torsion, par l'intermédiaire d'un longeron cylindrique (28).

4. Dispositif suivant la revendication 1, **caractérisé en ce que** la pale principale (18) est mise en place par rapport au plan de rotation de manière à former un angle (α₁) compris entre 15° et 60°.

5. Dispositif suivant la revendication 2, **caractérisé en ce que** la pale de fond (22) est mise en place par rapport au plan de rotation de manière à former un angle (α₂) compris entre 15° et 60°.

6. Dispositif suivant la revendication 1, **caractérisé en ce que** la pale terminale (30) est mise en place par rapport au plan de rotation de manière à former un angle (δ) compris entre 15° et 60°.

7. Dispositif suivant une des revendications précédentes, **caractérisé en ce que** la pale terminale (30), la pale principale (18) et la pale de fond (22) sont mises en place par rapport à la paroi intérieure du récipient (12) de manière à former un angle de dépouille (β) compris entre 1° et 30°.

8. Dispositif suivant la revendication 1, **caractérisé en ce que** la pale terminale (30) est mise en place par rapport à la radiale de manière à former un angle d'inclinaison (γ) compris entre 1° et 30°.

9. Dispositif suivant la revendication 2 et 3, **caractérisé en ce que** les pales de fond (22) et les longerons cylindriques (28) des deux bras mélangeurs (16) présentent une forme essentiellement en Z (figure 2).

10. Dispositif suivant une des revendications précédentes, **caractérisé en ce que** l'écart entre les pales (18, 22, 30) et la paroi intérieure du récipient (12) est compris entre 1 et 10 mm.

11. Dispositif suivant une des revendications précédentes, **caractérisé en ce qu'**un brise-lames (32) au moins est monté dans le récipient (12).

12. Dispositif suivant la revendication 11, **caractérisé en ce que** le brise-lames (32) présente une section transversale essentiellement circulaire et **en ce qu'**il est biseauté dans le sens d'écoulement.

13. Dispositif suivant une des revendications précédentes, **caractérisé en ce qu'**il est équipé d'un hacheur (34), par l'intermédiaire duquel des forces de cisaillement élevées peuvent être introduites dans le produit.

14. Dispositif suivant la revendication 13, **caractérisé en ce que** le hacheur (34) présente un arbre (36), sur lequel sont fixés plusieurs couteaux (38).

15. Dispositif suivant une des revendications précédentes, **caractérisé en ce qu'**un dispositif de gazage (40) est inséré dans le fond (48) du récipient (12).

16. Dispositif suivant la revendication 15, **caractérisé en ce qu'**un gaz, par exemple de l'air, peut être introduit dans le récipient (12), depuis le dispositif de gazage (40), dans le sens d'écoulement du produit à traiter.

17. Dispositif suivant la revendication 1, **caractérisé en ce que** le récipient (12) présente un fond plan (48) qui, via une zone de transition courbe (50), se transforme en paroi cylindrique du récipient (12).

18. Dispositif suivant la revendication 17, **caractérisé en ce que** le rayon de la zone de transition (50) est à peu près de (0,05 à 0,02) x D. (D= diamètre intérieur du récipient (12))

19. Dispositif suivant la revendication 2, **caractérisé en ce que** la hauteur (H1) de la pale de fond (22) est à peu près de (0,1 à 0,3) x D. (D= diamètre intérieur du récipient (12))

20. Dispositif suivant la revendication 1, **caractérisé en ce que** la hauteur (H2) de la pale principale (18, 20) est à peu près de (0,2 à 0,5) x D. (D= diamètre intérieur du récipient (12)).
